# EUROPÄISCHE PATENTSCHRIFT

(11) **EP 0 838 024 B1**
(45) Veröffentlichungstag und Bekanntmachung des Hinweises auf die Patenterteilung: **03.12.2003**
(21) Anmeldenummer: 96926369.8
(22) Anmeldetag: 19.07.1996
(51) Int. Cl.: G01N 17/00

(54) **VERFAHREN ZUR BEHANDLUNG VON WERKSTOFFPROBEN UND LICHT- UND BEWITTERUNGSPRÜFGERÄT**
METHOD FOR TREATING MATERIAL SAMPLES AND APPARATUS FOR TESTING EXPOSURE TO LIGHT AND WEATHERING
PROCEDE DE TRAITEMENT D'ECHANTILLONS DE MATERIAUX ET APPAREIL DE CONTROLE D'EXPOSITION A LA LUMIERE ET AUX AGENTS ATMOSPHERIQUES

(30) Priorität: 20.07.1995 DE 19526368
(43) Veröffentlichungstag der Anmeldung: 29.04.1998
(73) Patentinhaber: Xenotest Gesellschaft für die Herstellung von Materialprüfgeräten mbH, 63589 Linsengericht/Altenhasslau (DE)
(72) Erfinder: HEEGER, Roland, D-63486 Bruchköbel (DE); SCHÖNLEIN, Arthur, D-65428 Rüsselsheim (DE); RUDOLPH, Bernd, D-63755 Alzenau (DE); MARCH, Peter, D-60326 Frankfurt (DE)
(74) Vertreter: Schumacher, Bernd, Dipl.-Ing.
(86) Internationale Anmeldenummer: EP9603183
(87) Internationale Veröffentlichungsnummer: WO97004298

(56) Entgegenhaltungen:
- EP-A- 0 183 921
- DE-A- 2 816 548
- DE-C- 3 726 803
- DE-U- 9 100 816
- PATENT ABSTRACTS OF JAPAN vol. 6, no. 90 (C-104), 27.Mai 1982 & JP,A,57 021458 (MITSUBISHI ELECTRIC CORP), 4.Februar 1982,

## Beschreibung

Die Erfindung betrifft Verfahren zur Regelung der Temperatur von Werkstoff-Proben in einem Licht- und Bewitterungsprüfgerät mit einem abgeschlossenen Raum für Proben, in dem mittels Strahlungsanordnung sichtbares Licht, UV- und IR-Strahlung erzeugt wird, sowie ein Licht- und Bewitterungsprüfgerät.

Aus der DE-PS 20 14 288 ist ein Licht- und Wetterechtheitsprüfgerät mit einem Probenraum bekannt, in dem auf einem Zylindermantel angeordnete Proben eine Strahlenquelle umgeben, wobei zwischen dieser und den Proben ein den Infrarotanteil der Strahlung selektiv reflektierender, für den sichtbaren und UV-Anteil durchlässiger zylinderförmig ausgebildeter Spiegel vorgesehen ist; als besonders problematisch ist die Einwirkung von Strahlung im kurzwelligen Infrarotbereich von 800 bis 1000 nm anzusehen. In der Mitte des zylinderförmig ausgebildeten Spiegels ist ein von einem Kühlmedium durchströmbares Metallrohr angeordnet, um die mit steigender Intensität der UV-Strahlung wachsende Intensität der gleichzeitig erzeugten und als Wärme auftretenden Infrarotstrahlung abzuführen; auf diese Weise wird eine Beeinflussung der Proben durch Abbaureaktionen infolge Infrarotstrahlung weitgehend vermieden, so daß eventuelle Veränderungen der Probe allein der Einwirkung von UV-Strahlung zugeschrieben werden können.

Weiterhin ist aus der EP 0 320 209 A2 ein Wettertestsystem bekannt, bei dem die Innenflächen von Proben auf der Innenseite eines nährungsweise sphärisch ausgebildeten Hatterungsgestells angeordnet sind und einem mittels Gebläse hindurchgeführten Luftstrom sowie einer Lichtquelle ausgesetzt sind; mit Hilfe einer Regelungseinrichtung für das Gebläse werden eine vorgegebene Temperatur im Inneren des Probengestells aufrechterhalten.

Weiterhin ist aus der DT 24 23 052 A1 ein Verfahren und eine Vorrichtung zur Prüfung der Wetterbeständigkeit von Proben bekannt, wobei zur beschleunigten Prüfung der Proben während der Dämmerung, Dunkelheit bzw. der Nacht eine künstliche optische Bestrahlung einer oder mehrerer Strahlenquellen, die auch ultraviolette, bzw, superaktinische Strahlung abgeben, vorgesehen ist; das zur Prüfung von Wetterbeständigkeit von Proben im Freien vorgesehene Prüfgestell weist einen Probenträger, bzw. mehrere Träger für die Bestrahlungsvorrichtung mit einer Führungs- und Antriebsvorrichtung auf, wobei die Strahlenquellen auch ultraviolette, bzw. superaktinische Strahlung abgeben und während der nächtlichen künstlichen Bestrahlung keine anormal erhöhten Temperaturen erzielt werden, da hohe Probentemperaturen eine anderartige Veränderung der Probenkörper wie bei einer natürlichen Freibewetterung hervorrufen können.

Als problematisch erweist sich nach dem Stand der Technik, daß eine exakte Festlegung der Oberflächentemperatur, die für eine praxisnahe Probebestrahlung möglichst konstant gehalten werden soll, hier nicht durchzuführen ist. Insbesondere ist es nicht möglich, die mittels Schwarzstandard-Thermometer gemessene Schwarzstandard-Temperatur unabhängig von anderen Parametern einzustellen, um gemäß DIN-Norm 53387 Temperaturverhältnisse dunkelfarbiger Probekörper mit geringer Wärmeleitfähigkeit in der Ebene der Probehalterungen während des Bestrahlens zu charakterisieren.

Die Erfindung stellt sich die Aufgabe ein Verfahren zur Einstellung, bzw. Konstanthaltung der Oberflächentemperatur der Werkstoffproben sowie ein Licht- und Wetterechtheitsprüfgerät mit einem Probenraum anzugeben, in dem die Proben eine einstellbare, gegebenenfalls konstante Oberflächentemperatur aufweisen, die unabhängig von der UV-Bestrahlungsstärke ist, wobei Probenraumtemperatur und atmosphärische Durchströmung, bzw. Klimalüfterdrehzahl konstalt gehalten werden; mittels Filter soll in den Probenraum eine der Globalstrahlung angenäherte Strahlung abgegeben werden, wie Sie beispielsweise in der Veröffentlichung der Commission International de l'Eciairage Publ. No. CIE85/1989 1st Edition 1989, Tabelle 4, angegeben sind.

Die Aufgabe wird verfahrensgemäß durch die kennzeichnenden Merkmale des Anspruchs 1 gelöst.

In einer vorteilhaften Ausgestaltung des Verfahrens wird die Intensität der IR-Strahlung durch Vergleich einer im Probenbereich gemessenen Oberflächentemperatur mit einem vorgegebenen Temperatur-Sollwert geregelt, wobei die Intensität der IR-Strahlung von einem Stellsignal des Reglers gesteuert wird, das von der am Eingang des Reglers ermittelten Differenz, bzw. Regelabweichung des Sensor-Signals vom Sollwert-Signal abhängt.

Als vorteilhaft erweist sich die verhältnismäßig einfache Regelung der Oberflächentemperatur der Proben als Einzelparameter.

Vorrichtungsgemäß wird die Aufgabe durch die kennzeichnenden Merkmale des Anspruchs 2 gelöst.

In einer vorteilhaften Ausgestaltung der Vorrichtung weist die Strahlungsanordnung wenigstens eine Entladungslampe zur Emission von UV-Strahlung und sichtbarem Licht, sowie einen separaten Temperatur-Strahler als Infrarotstrahlenquelle auf; die Intensität der vom Temperaturstrahler abgegebenen IR-Strahlung wird durch Ansteuerung der Stromversorgung mittels Stellsignal des Regelers eingestellt, bzw. bei Regelabweichung nachgestellt; durch Interferenzfilter wird IR-Strahlung unterhalb einer Wellenlänge von 1200 nm absorbiert bzw. reflektiert, so daß die für die Erwärmung der Proben-Oberflächen relevante IR-Strahlung eine Wellenlänge von mehr als 1200 nm aufweist. Der Probenraum wird mittels Gebläse von einem Luftstrom mit annähernd konstantem Luftdurchsatz durchströmt.

Weitere vorteilhafte Ausgestaltungen der Erfindung sind in den Ansprüchen 3 bis 9 angegeben.

Ein wesentlicher Vorteil ist in der stets konstanten Oberflächentemperatur zu sehen, da hiermit reproduzierbare Versuchsergebnisse erzielt werden können; weiterhin erweist es sich als vorteilhaft, mittels Zeitplanregelung gegebenenfalls eine Variation der Oberflächentemperatur gezielt durchführen zu können.

Im folgenden ist der Gegenstand der Erfindung anhand der Figuren 1, 2 und 3 näher erläutert.
Figur 1 zeigt schematisch einen Querschnitt durch das Licht- und Bewitterungsprüfgerät,
Figur 2 zeigt die Transmission der Filtercharakteristik, sowie die spektrale Bestrahlungsstärke der Infrarot-Strahlenquelle im Spektralbereich von 900 bis 2500 nm,
Figur 3 zeigt schematisch im Blockschaltbild die Regelungseinrichtung für das Licht- und Bewitterungsprüfgerät.

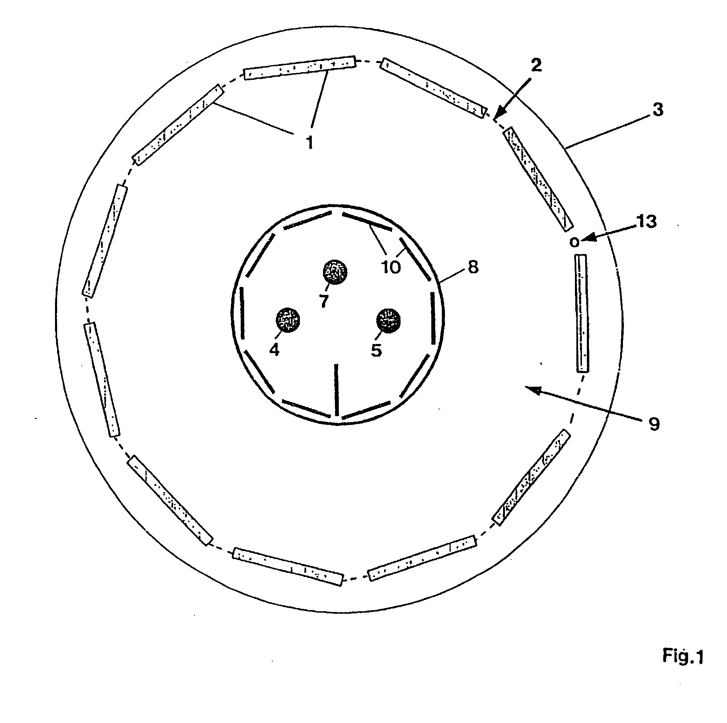

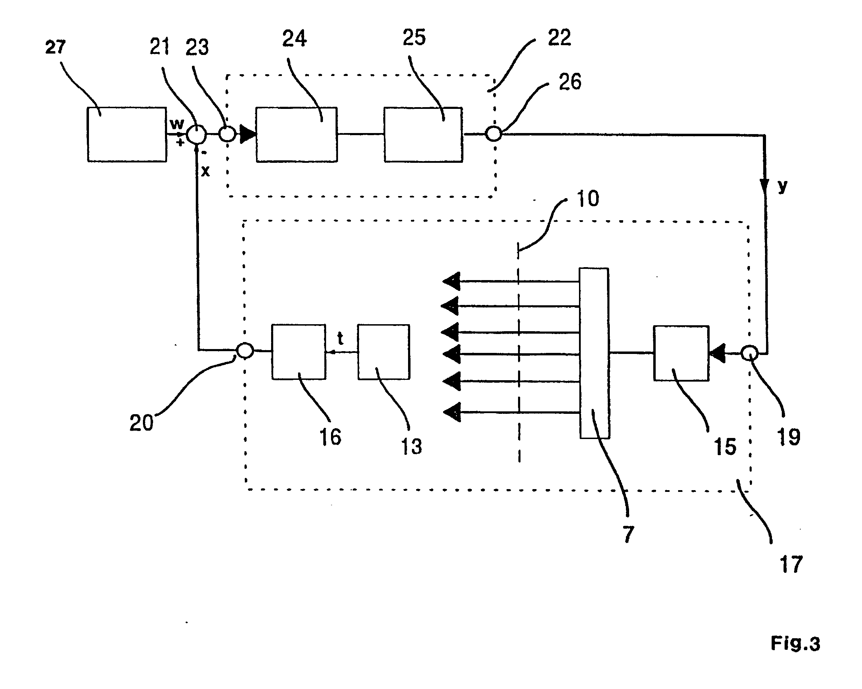

Gemäß der schematischen Querschnittsdarstellung des Probenraumes in Figur 1 sind die Proben 1 an einem drehbaren Proben-Träger 2 befestigt, welcher mittels einer hier nicht dargestellten Antriebsvorrichtung in konstante Drehung versetzt wird. Im zentralen Bereich des zylinderformigen Gehäuses 3 befindet sich eine Strahleranordnung aus zwei Entladungslampen 4, 5 zur Erzeugung von UV-Strahlung und sichtbarem Licht und einem Infrarotstrahler 7; Entladungslampen und Infrarotstrahler sind von einem zylinderförmigen Filter 8 gegenüber dem Probenraum 9 abgeschlossen, welcher entlang der Strahlendurchtrittsflächen von einem Kühlmedium durchströmt ist und insbesondere die kurzweiligen Infrarotanteile der Entladungslampen im Bereich von 800 bis 1000 nm absorbiert, gleichzeitig jedoch für Strahlung im langweiligen Ultraviolettbereich von 300 bis 400 nm und im sichtbaren Spektralbereich weitgehend durchlässig ist. Die Innenfläche des Filters 8 ist weiterhin gegenüber den Strahlern bzw. Entiadungsiampen mit polygonartig aneinander gefügten Interferenzfiltern 10 abgedeckt, welche für den langwelligen UV-Bereich von 300 bis 400 nm und sichtbaren Spektralbereich weitgehend durchlässig sind, während sie Strahlung im Infrarotwellenbereich von 900 bis ca. 1200 nm weitgehend absorbieren. Ab einer Wellenlänge von ca. 1200 bis 1250 bis in den Bereich von 2500 nm sind die Interferenzfilter 10 mit einer Transmission von 70 bis 95 % für die mittel- und langwellige Infrarotstrahlung weitgehend durchlässig.

Weiterhin ist im Inneren des Filters 8 ein die reflektierte Infrarotstrahlung absorbierender Körper vorgesehen, welcher von einem Kühlmedium zur Wärmeabfuhr, wie beispielsweise Luft oder Wasser durchströmt ist.

Im Bereich des drehbaren Proben-Trägers 2 ist auf der Höhe der Oberflächen der Proben 1 ein Temperatursensor 13 angeordnet, welcher die aufgrund der Infrarotstrahlung des IR-Strahlers 7 übertragene Strahlungs-Wärme, d.h. die Oberflächentemperatur der Proben mißt. Mit Hilfe der nachstehend erläuterten Regeleinrichtung ist es somit möglich, die Schwarzstandard-Temperatur der zu prüfenden Stoffe auf der Basis der Probenraum-Temperatur der vom umströmenden Medium abhängenden Temperatur als einen der entscheidenden Parameter unabhängig von anderen Parametern einzustellen und zu regeln, wobei die Toleranzvorgaben der DIN 75220 bezüglich der Globalstrahlung gemäß der eingangs genannten Tabelle 4 der CIE möglichst eingehalten werden sollen.

Während des normalen Betriebes ist es dabei möglich, die Proben der für den späteren Einsatz relevanten durch den Probenraum strömenden Atmosphäre wie z.B. Luft mit einem vorgegebenen Feuchtigkeitsgehalt und vorgegebener Strömungsgeschwindigkeit auszusetzen.

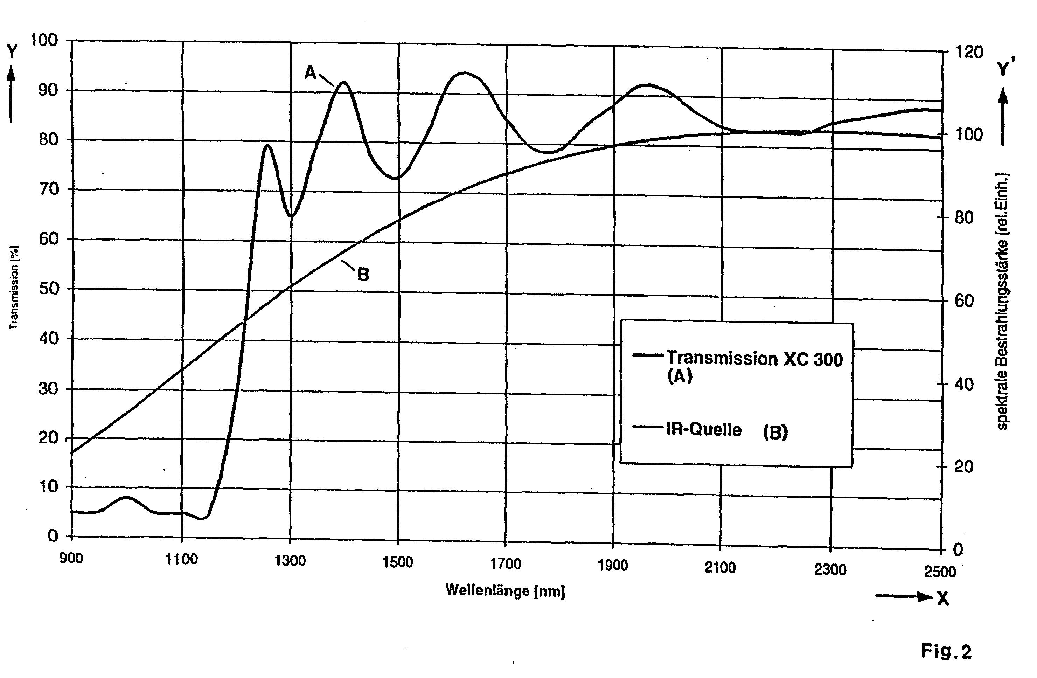

Anhand Kurve A der Figur 2 ist die Filtercharakteristik der Interferenzfilter 10 nach Figur 1 näher erläutert. Wie anhand der entlang der X-Achse aufgetragenen Wellenlänge erkennbar ist, beträgt die entlang der Y-Achse angegebene Transmission im Bereich bis zu ca. 1130 nm lediglich 5 %, während sie im Bereich ab 1250 nm auf einen Bereich von 70 bis über 90 % ansteigt, so daß das für das Testverhalten der Proben störende Infrarot-Spektrum ferngehalten wird, während die verhältnismäßig energiearme Infrarotstrahlung des mittleren und längerwelligen Bereiches zu den Proben gelangt und als unabhängige Parameter einstellbar, bzw. regelbar ist. Als Interferenzfilter haben sich insbesondere Wärmereflexionsfilter bewährt, die einen Sperrbereich von ca. 800 bis 1200 nm aufweisen und im Handel erhältlich sind. Es ist jedoch auch möglich, andere Filter mit einer entsprechenden Transmissionscharakteristik einzusetzen.

Kennlinie B des Diagramms in Figur 2 ist auf die spektrale Bestrahlungsstärke in relativen Einheiten der Infrarot-Strahlenquelle 7 gerichtet, die entlang der Y'-Achse in Abhängigkeit der auf der X-Achse angegebenen Wellenlänge dargestellt ist; wie anhand des Verlaufs der Kurve B erkennbar ist, ist die abgestrahlte Intensität im Bereich von 900 bis 1280 nm kleiner als 60 relative Einheiten der spektralen Bestrahlungsstärke, während sie im Bereich von 1300 bis 2500 nm von einem Wert 60 bis zu einem Wert 100 der relativen Bestrahlungsstärke ansteigt, so daß der für die Schwarzstandard-Temperatur relevante Spektralbereich mit einer hohen Intensität auf die Probenebene übertragen werden kann.

Anhand der schematischen Darstellung in Figur 3 ist die Regeleinrichtung näher erläutert; der von einer steuerbaren Stromversorgung 15 gespeiste Infrarotstrahler 7 stellt zusammen mit dem Temperatursensor 13 und einem Analog-Digitalwandler 16 die Regelstrecke 17 der Regeleinrichtung dar. Über Eingang 19 wird mittels eines Stellsignals Y die Stromversorgung 15 so angesteuert, daß eine vorgegebene Strahlungsintensität des angeschlossenen Infrarot-Strahlers 7 mittels Regelung erzielt werden kann. Als Infrarotstrahler hat sich insbesondere ein Strahler mit Wolfram-Glühwendel bewährt, der eine Leistungsaufnahme im Bereich von 500 W bis 2 kW aufweist. Die vom Strahler 7 über Infrarotfilter 10 in den Probenraum abgegebene Infrarotstrahlung erzeugt in der Probenebene eine Wärme, deren Temperatur vom Temperatursensor 13 ermittelt und als elektrisches Signal t an den Analog-Digitalwandler 16 weitergeleitet wird; dieser wandelt das Analog-Signal t in eine digitale Regelgröße x um, welche über Ausgang 20 einem Vergleicher 21 am Eingang 23 des Reglers 22 zugeführt wird; während Regelgröße x beispielsweise als negatives digitales Signal zugeführt wird, wird ein vorgegebener digitaler Sollwert w aus einer Sollwertvorgabe-Einrichtung 27 als positiver digitaler Wert dem Vergleicher 21 zugeführt und so am Ausgang des Vergleichers die digitale Regelabweichung (w - x) ermittelt und dem Regler 22 über seinen Eingang 23 zuführt. Innerhalb des Reglers 22 sind ein Mikroprozessor 24 und ein Signalprozessor 25 angeordnet, wodurch am Ausgang 26 des Reglers ein Stell-Signal y erzeugt wird, das zur Steuerung der Stromversorgung 15 für den Infrarot-Strahler 7 über Eingang 19 dient und solange als Stell-Signal wirksam ist, bis die Regelabweichung w - x = o ist und somit die von Infrarotstrahlern abgegebene Strahlung 7 dem vorgegebenen Soll-Wert w entspricht. Aufgrund des digitalen Aufbau des Reglers 22 ist es durch Programmierung des Mikroprozessors als Reglerbaustein möglich, ein optimales Regelverhalten zu erzielen.

Falls die Oberflächentemperatur der Proben während des Behandlungsprozesses variiert werden soll, ist es möglich, anstelle eines fest vorgegebenen Sollwerts weinen Zeitplangeber mit zeitlich variiertem Sollwert bzw. eine Programm-Regelung einzusetzen.

Der Einsatz eines zusätzlichen Infrarotstrahlers als reine Wärmequelle gemäß der Erfindung ermöglicht es, die Oberflächentemperatur der Proben, die ansonsten vom Absorptionsverhalten zu prüfenden Materialien, der Probenraumtemperatur und der Geschwindigkeit des durchströmenden Mediums abhängt, als einen der entscheidenden Parameter völlig unabhängig einzustellen und zu regeln.

## Patentansprüche

1. Verfahren zur Regelung der Temperatur von Werkstoff-Proben in einem Lichtund Bewitterungsprüfgerät mit einem durchströmten, abgeschlossenen Raum für Werkstoff-Proben, in dem mittels einer Strahlungsanordnung, die wenigstens eine als Xenon-Strahler ausgebildete Entladungslampe enthält, sichtbares Licht, UV- und IR-Strahlung erzeugt wird,
**dadurch gekennzeichnet,**
**daß** die IR-Strahlung von einem Temperaturstrahler erzeugt wird,
**daß** IR-Strahlung mit einer Wellenlänge unterhalb von 1200 nm mittels Filter weitgehend unterdrückt wird,
**daß** IR-Strahlung mit einer Wellenlänge oberhalb von 1200 nm zu den Werkstoffproben transmittiert wird,
**daß** die von der IR-Strahlung erzeugte Wärme auf den Proben-Oberflächen mittels Temperatur-Sensor als Temperatur-Signal gemessen und einem Regler zur Regelung der Oberflächentemperatur durch Intensitäts-Steuerung der IR-Strahlung auf einen vorgegebenen Temperatur-Sollwert zugeführt wird
und **daß** die Strahlungsintensität des Temperaturstrahlers in Abhängigkeit von einem Stellsignal des Reglers eingestellt wird, wobei das Stellsignal von der Regelabweichung zwischen Temperatur-Sollwert und gemessenem Temperatur-Signal abhängig ist.

2. Licht- und Bewitterungsprüfgerat mit einem abgeschlossenen Raum für Proben, in dem eine von einem drehbar angeordneten Probenhalter umgebene Strahlungsanordnung vorgesehen ist, die wenigstens eine als Xenon-Strahler ausgebildete, UV-Strahlung sowie sichtbares Licht emittierende Entladungslampe enthält und sichtbares Licht, UV- und IR-Strahlung auf die Proben abstrahlt,
**dadurch gekennzeichnet,**
**daß** in der Probenebene wenigstens ein Temperatur-Sensor (13) zur Regelung der Intensität der IR-Strahlung vorgesehen ist und
**daß** die Strahlungsanordnung wenigstens einen elektrischen Temperatur-strahler (7) zur Emission von IR-Strahlung aufweist, dessen IR-Strahlung mit einer Wellenlänge unterhall von 1200 nm mittels Filter weit gehend unterdrückt wird, dessen IR-Strahlung mit einer Wellenlänge oberhall von 1200 nm zu den Probentransmittiert wird und dessen Intensität mittels Ansteuerung seiner Stromversorgung über den Stellausgang (26) eines Reglers (22) einstellbar ist, wobei der Eingang (23) des Reglers über ein Vergleichsglied (21) mit dem Temperatur-Sensor (13) zur Ermittlung der Regelabweichung des gemessenen Temperaturwertes von einem vorgegebenen Temperatur-Sollwert-Signal verbunden ist.

3. Licht- und Bewitterungsprüfgerät nach Anspruch 2, **dadurch gekennzeichnet, daß** zwischen Probenraum (9) und Entladungslampe wenigstens ein Filter (10) zur Anpassung der von der Lampe abgegebenen Strahlung an die Global-Strahlung angeordnet ist.

4. Licht- und Bewitterungsprüfgerät nach Anspruch 3, **dadurch gekennzeichnet, daß** die Entladungslampe in Richtung des Probenraumes (9) gesehen von einem zylinderförmigen Filter (8) zur Absorption der von der Entladungslampe (4, 5) abgegebenen Infrarotanteile umgeben ist.

5. Licht- und Bewitterungsprüfgerät nach einem der Ansprüche 2 bis 4, **dadurch gekennzeichnet, daß** zwischen Temperaturstrahler (7) und Probenraum (9) wenigstens ein Filter (8, 10) zur Absorption von Strahlung mit einer Wellenlänge unterhalb von 1200 nm angeordnet ist.

6. Licht- und Bewitterungsprüfgerät nach Anspruch 5, **dadurch gekennzeichnet, daß** der Temperaturstrahler in Richtung Probenraum gesehen von wenigstens einem Filter (8, 10) zur Absorption von Strahlung mit einer Wellenlänge unterhalb von 1200 nm umgeben ist.

7. Licht- und Bewitterungsprüfgerät nach einem der Ansprüche 4 bis 6, **dadurch gekennzeichnet, daß** die Entladungslampe (4, 5) und der Temperaturstrahler (7) innerhalb des zylinderförmigen Filters (8) angeordnet sind.

8. Licht- und Bewitterungsprüfgerät nach Anspruch 7, **dadurch gekennzeichnet, daß** wenigstens der Temperaturstrahler (7) von polygonartig angeordneten ebenen Filtern (10) zur Absorption einer Wellenlänge unterhalb 1200 nm umgeben ist.

9. Licht- und Bewitterungsprüfgerät nach einem der Ansprüche 2 bis 8, **dadurch gekennzeichnet, daß** der in der Probenebene angeordnete Temperatursensor (13) als Teil eines Regelkreises ausgebildet ist, der einen Regler (22) mit Soll-Istwert-Temperatur-Vergleich am Regler-Eingang (23) aufweist, wobei der Regler-Ausgang (26) mit einem Stellglied (15) zur Steuerung der Strahlungsleistung des Temperaturstrahlers (7) verbunden ist.

## Claims

1. A method for regulating the temperature of material samples in a light and weathering test apparatus with a closed chamber with air circulation for material samples, in which chamber by means of a radiation arrangement, which includes at least one discharge lamp configured as a xenon radiator, visible light, UV and IR radiation are generated, **characterised in that** the IR radiation is generated by a temperature radiator, **in that** infrared radiation with a wavelength below 1200 nm is largely suppressed by means of filters, **in that** IR radiation with a wavelength above 1200 nm is transmitted to the material samples, **in that** the heat produced on the surfaces'of the sample by the IR radiation is measured by means of a temperature sensor as a temperature signal and is supplied to a regulator for regulating the surface temperature to a predetermined set-point temperature value by controlling the intensity of the IR radiation, and **in that** the radiation intensity of the temperature radiator is adjusted as a function of a control signal of the regulator, the control signal being dependent on the control deviation between the set-point temperature value and the measured temperature signal.

2. A light and weathering test apparatus with a closed-off chamber for samples, in which a radiation arrangement surrounded by a rotatable sample holder is provided, which includes at least one discharge lamp configured as a xenon radiator and emitting both UV radiation and visible light, and which radiates visible light and UV and IR radiation to the sample, **characterised in that** at least one temperature sensor (13) for regulating the intensity of the IR radiation is provided in the plane of the samples, **in that** the radiation arrangement has at least one electric temperature radiator (7) for emitting IR radiation, whose IR radiation with a wavelength below 1200 nm is largely suppressed by means of filters, whose IR radiation with a wavelength above 1200 nm is transmitted to the samples, and whose intensity is adjustable by means of directing its power supply via the control output (26) of a regulator (22), the input (23) of the regulator being connected via a comparison element (21) to the temperature sensor (13) for calculating the control deviation in the measured temperature value from a predetermined set-point temperature value signal.

3. Light and weathering test apparatus according to claim 2, **characterised in that** at least one filter (10) for adapting the radiation emitted by the lamp to the global radiation is located between the sample chamber (9) and the discharge lamp.

4. Light and weathering test apparatus according to claim 3, **characterised in that** the discharge lamp, viewed in the direction of the sample chamber (9), is surrounded by a cylindrical filter (8) for absorbing the infrared components emitted by the discharge lamp (4, 5).

5. Light and weathering test apparatus according to any of claims 2 to 4, **characterised in that** at least one filter (8, 10) for absorbing radiation with a wavelength below 1200 nm is located between the temperature radiator (7) and the sample chamber (9).

6. Light and weathering test apparatus according to claim 5, **characterised in that** the temperature radiator, viewed in the direction of the sample chamber, is surrounded by at least one filter (8, 10) for absorbing radiation with a wavelength below 1200 nm.

7. Light and weathering test apparatus according to any of claims 4 to 6, **characterised in that** the discharge lamp (4, 5) and temperature radiator (7) are located inside the cylindrical filter (8).

8. Light and weathering test apparatus according to claim 7, **characterised in that** at least the temperature radiator (7) is surrounded by flat filters (10) arranged in the manner of a polygon, for absorbing a wavelength below 1200 nm.

9. Light and weathering test apparatus according to any of claims 2 to 8, **characterised in that** the temperature sensor (13) located in the plane of the samples is configured as part of a closed-loop control circuit which has a regulator (22) with comparison of the set-point and actual temperature values at the regulator input (23), the regulator output (26) being connected to a final control element (15) for controlling the radiation output of the temperature radiator (7).

## Revendications

1. Procédé de régulation de la température d'échantillons de matériaux dans un appareil de contrôle d'exposition à la lumière et aux agents atmosphériques, comprenant un espace fermé, balayé par un fluide, pour des échantillons de matériaux, dans lequel sont produits de la lumière visible, un rayonnement UV et IR au moyen d'un agencement de rayonnement, qui comporte au moins une lampe à décharge réalisée sous forme d'émetteur à xénon, **caractérisé en ce que** le rayonnement IR est produit par un radiateur thermique, **en ce que** le rayonnement IR d'une longueur d'ondes inférieure à 1200 nm est largement supprimé au moyen de filtres, **en ce que** le rayonnement IR d'une longueur d'ondes supérieure à 1200 nm est transmis aux échantillons de matériaux, **en ce que** la chaleur produite par le rayonnement IR sur les surfaces des échantillons est mesurée au moyen d'un capteur de température sous forme de signal thermique et transmise à un régulateur pour réguler la température superficielle, par contrôle d'intensité du rayonnement IR, à une valeur de consigne de température prédéfinie, et **en ce que** l'intensité du rayonnement du radiateur thermique est réglée en fonction d'un signal de réglage du régulateur, le signal de réglage dépendant de l'écart de régulation entre la valeur de consigne de température et le signal de température mesuré.

2. Appareil de contrôle d'exposition à la lumière et aux agents atmosphériques, comprenant un espace fermé pour des échantillons, dans lequel est prévu un agencement de rayonnement, entouré par un support d'échantillons rotatif, qui comprend au moins une lampe à décharge réalisée sous forme d'émetteur à xénon, émettant un rayonnement UV ainsi que de la lumière visible, et irradie les échantillons de lumière visible, de rayonnement UV et IR, **caractérisé en ce qu'**au moins un capteur de température (13) est prévu dans le plan des échantillons pour réguler l'intensité du rayonnement IR, et **en ce que** l'agencement de rayonnement présente au moins un radiateur thermique électrique (7) pour l'émission du rayonnement IR, dont le rayonnement IR d'une longueur d'ondes inférieure à 1200 nm est largement supprimé au moyen de filtres, dont le rayonnement IR d'une longueur d'ondes supérieure à 1200 nm est transmis aux échantillons, et dont l'intensité est réglable par attaque de son alimentation en courant à travers la sortie (26) d'un régulateur (22), l'entrée (23) du régulateur étant reliée par l'intermédiaire d'un comparateur (21) au capteur de température (13) pour la détermination de l'écart de régulation entre la valeur de température mesurée et un signal de valeur de consigne de température prédéfini.

3. Appareil de contrôle d'exposition à la lumière et aux agents atmosphériques suivant la revendication 2, **caractérisé en ce qu'**au moins un filtre (10) est disposé entre l'espace d'échantillonnage (9) et la lampe à décharge pour l'adaptation du rayonnement émis par la lampe à la radiation globale.

4. Appareil de contrôle d'exposition à la lumière et aux agents atmosphériques suivant la revendication 3, **caractérisé en ce que** la lampe à décharge, vu dans la direction de l'espace d'échantillonnage (9), est entourée par un filtre cylindrique (8) pour l'absorption des parts infrarouges émises par la lampe à décharge (4, 5).

5. Appareil de contrôle d'exposition à la lumière et aux agents atmosphériques suivant l'une des revendications 2 à 4, **caractérisé en ce qu'**au moins un filtre (8, 10) est disposé entre le radiateur thermique (7) et l'espace d'échantillonnage (9) pour l'absorption du rayonnement d'une longueur d'ondes inférieure à 1200 nm.

6. Appareil de contrôle d'exposition à la lumière et aux agents atmosphériques suivant la revendication 5, **caractérisé en ce que** le radiateur thermique, vu en direction de l'espace d'échantillonnage, est entouré d'au moins un filtre (8, 10) pour l'absorption du rayonnement d'une longueur d'ondes inférieure à 1200 nm.

7. Appareil de contrôle d'exposition à la lumière et aux agents atmosphériques suivant l'une des revendications 4 à 6, **caractérisé en ce que** la lampe à décharge (4, 5) et le radiateur thermique (7) sont disposés à l'intérieur du filtre cylindrique (8).

8. Appareil de contrôle d'exposition à la lumière et aux agents atmosphériques suivant la revendication 7, **caractérisé en ce qu'**au moins le radiateur thermique (7) est entouré de filtres plans (10), disposés en forme de polygone, pour l'absorption d'une longueur d'ondes inférieure à 1200 nm.

9. Appareil de contrôle d'exposition à la lumière et aux agents atmosphériques suivant l'une des revendications 2 à 8, **caractérisé en ce que** le capteur de température (13), disposé dans le plan des échantillons, est réalisé en tant que partie d'un circuit de régulation, qui présente un régulateur (22) avec une comparaison entre la température de consigne et la température effective à son entrée (23), la sortie (26) du régulateur étant reliée à un organe de réglage (15) pour contrôler la puissance rayonnée du radiateur thermique (7).
